# EUROPÄISCHE PATENTSCHRIFT

(11) **EP 1 040 749 B1**
(45) Veröffentlichungstag und Bekanntmachung des Hinweises auf die Patenterteilung: **03.09.2003**
(21) Anmeldenummer: 00105263.8
(22) Anmeldetag: 14.03.2000
(51) Int. Cl.: A01D 61/00

(54) **Lageranordnung für einen Finger**
Bearing arrangement for a finger
Arrangement de palier d'un doigt

(30) Priorität: 01.04.1999 US 283172
(43) Veröffentlichungstag der Anmeldung: 04.10.2000
(73) Patentinhaber: DEERE & COMPANY, Moline, Illinois 61265-8098 (US)
(72) Erfinder: Gosa, Duane Junior, Colona, IL 61241 (US)
(74) Vertreter: Holst, Sönke, Dr.

(56) Entgegenhaltungen:
- US-A- 2 803 505
- US-A- 3 348 706
- US-A- 4 271 956
- DATABASE WPI Section PQ, Week 198937 Derwent Publications Ltd., London, GB; Class P12, AN 1989-269016 XP002139402 & SU 1 463 979 A (ILNITSKII), 7. März 1989 (1989-03-07)

## Beschreibung

Die Erfindung betrifft eine Lageranordnung für einen Finger, mit einem schließbaren Lagerelement, das auf einem Achsabschnitt drehbar anordenbar ist, und einen Fingerhalterungsabschnitt aufweist, der zur Aufnahme eines ersten Endabschnitts eines Fingers eingerichtet ist.

Es ist bekannt, bei Schneidwerken für Erntemaschinen den Übergang des geernteten Gutes auf einen Schrägförderer mit einem Schneckenförderer zu unterstützen, der wendelförmige Förderelemente aufweist, um Gut von den seitlichen Enden des Schneidwerks zur Mitte des Schneidwerks und von dort dem Schrägförderer aufzugeben. Der mittlere Abschnitt des Schneckenförderers unmittelbar vor dem Schrägförderer ist mit einer Anordnung sich drehender und zurückziehender Finger versehen, bei der eine exzentrisch angeordnete Achse innerhalb des drehenden Rohrs des Schneckenförderers positioniert ist. Langgestreckte Finger sind auf der exzentrischen Achse drehbar gelagert und erstrecken sich im wesentlichen radial durch Führungsschlitze in der Oberfläche des Rohrs, so dass sich die Finger, wenn sich das Rohr dreht, um die Achse drehen und - wegen der Exzentrizität der Achse relativ zum Rohr - in den Führungsschlitzen hin- und herbewegt werden. Die Anordnung ist derart gestaltet, dass die Finger aus dem Rohr heraus kommen, um Erntegut zu ergreifen und es unter das Rohr in den Schrägförderer zu verbringen, und sich danach zurückziehen, um die Freigabe des vom Schrägförderer erfaßten Materials zu erleichtern.

Ein Schneidwerk muß bei einer Vielzahl von Boden- und Erntegutbedingungen betreibbar sein und wird häufig in der Nähe der maximalen Kapazitätsgrenze betrieben, so dass die Förderelemente, einschließlich des Schneckenförderers und der Finger einer schweren und sich stark ändernden Belastung, Abrieb durch im Erntegut enthaltene Verunreinigungen, und möglicherweise direkter mechanischer Beschädigung durch unbeabsichtigtes Fördern unerwünschter Körper, wie Steinen und Abfallmaterialien im Fördersystem ausgesetzt sind. Es ist daher relativ häufig nötig, die Finger des Schneckenförderers eines Schneidwerks zu entfernen und zu ersetzen, sowie abgenutzte Lagerungen von Fingern und/oder zerbrochene Finger auszutauschen.

Der Zugang zum Demontieren und Ersetzen einer Lageranordnung und/oder eines Fingers erfolgt durch Zugangsöffnungen im Rohr des Schneckenförderers, die in der Regel durch entfernbare Deckel verschlossen sind. Da der Zugang in das Rohr des Schneckenförderers derart beschränkt ist, ist das Austauschen von Fingern oder Lageranordnungen mühsam, unbequem und häufig zeitaufwendig. Der in der US 4 271 956 A beschriebene Fingerlagerungszusammenbau vereinfachte das Austauschen einer Lageranordnung und/oder eines Fingers im Vergleich mit dem damaligen Stand der Technik entscheidend. Die in dieser Patentschrift offenbarte Lageranordnung umfaßt zwei Hälften, die schwenkbar oder durch ein Scharnier aneinander befestigt sind, so dass die Hälften um die exzentrische Achse gelegt werden können und eine im wesentlichen zylindrische Lageroberfläche um die Achse bilden. Die Lagerhälften umfassen einen sich radial erstreckenden Fingerhalterungsabschnitt, der bei um die Achse herumgelegten Lagerhälften einen Sockel bereitstellt, um das innere Ende eines Fingers aufzunehmen. Eine Schraube wird durch die radialen Fingerhalterungsabschnitte und durch eine Bohrung in der Nähe des inneren Endes des Fingers gesteckt. Die Schraube wird durch eine Mutter gehalten, fixiert den Finger an der Lageranordnung und hält auch die zwei Lagerhälften in der die Achse umschließenden Position. Daher ist es nötig, Handwerkzeuge zu verwenden, um die Lageranordnung an der exzentrischen Achse und den Finger an der Lageranordnung zu befestigen.

Die der Erfindung zugrunde liegende Aufgabe wird darin gesehen, eine verbesserte Lageranordnung für einen Finger bereitzustellen, die ohne Handwerkzeuge an der Achse befestigbar ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die erfindungsgemäße Lageranordnung umfaßt ein Lagerelement, das schließbar auf dem Achsabschnitt angeordnet ist und somit auch geöffnet werden kann. In geöffneter Stellung kann das Lagerelement vom Achsabschnitt abgenommen bzw. darauf aufgesetzt werden, während die geschlossene Stellung der Betriebsstellung entspricht, in der das Lagerelement auf dem Achsabschnitt festgesetzt ist. Eine auf den Fingerhalterungsabschnitt aufschiebbare Hülse umschließt letzteren und dient dazu, das Lagerelement zu schließen und durch das geschlossene Lagerelement auch den Finger am Lagerelement zu befestigen. Bei abgenommener Hülse kann das Lagerelement geöffnet und vom Achsabschnitt abgenommen werden, während es bei montierter Hülse auf dem Achsabschnitt zwar drehbar, aber in radialer Richtung festgesetzt ist. Außerdem hält die montierte Hülse die Fingerhalterungsabschnitte des Lagerelements in einer Position, in der der Finger fixiert ist. Bei abgenommener Hülse kann der Finger ausgetauscht werden.

Auf diese Weise erhält man eine Lageranordnung, die auch ohne Handwerkzeug ein- und ausgebaut werden kann. Zum Austausch der Lagerung bzw. des Fingers kann die Hülse abgezogen werden, und nach erfolgtem Austausch wird sie wieder auf den Fingerhalterungsabschnitt des Lagerelements aufgeschoben.

Das Lagerelement kann insbesondere aus zwei separaten Lagerhälften bestehen, die durch ein Scharnier miteinander verbindbar sind. Denkbar ist auch ein einteilig gegossenes Lagerelement, das aus zwei Lagerhälften besteht, die durch ein Filmscharnier untereinander verbunden sind. Die beiden Lagerhälften sind eingerichtet, den Achsabschnitt zu umschließen. Durch das Abnehmen bzw. Aufsetzen der Hülse kann das Lösen bzw. Befestigen des Lagerelements auf dem Achsabschnitt somit auf einfache Weise erfolgen. Jede Lagerhälfte weist einen Fingerhalterungsabschnitt auf. Zwischen den beiden Fingerhalterungsabschnitten ist der Finger einklemmbar.

Zur Arretierung des Fingers und der Hülse am Fingerhalterungsabschnitt sind im Rahmen des erfindungsgemäßen Gedankens verschiedene Möglichkeiten denkbar. Zum einen kann eine Öffnung die genannten Elemente durchdringen, und ein Halterungselement in dieser Bohrung positioniert werden. Das Halterungselement sichert die Hülse in der Längsrichtung des Fingers. Durch das Halterungselement wird auch der Finger in seiner Längsrichtung arretiert, und die Hülse bewirkt, dass das Lagerelement auf dem Achsabschnitt festgesetzt ist. Als Halterungselement kann eine Schraube und eine Mutter dienen, oder ein Haltestift, der insbesondere ein federnder verriegelbarer Splint ist. Der Vorteil des Stifts besteht darin, dass er ohne zusätzliches Handwerkzeug einsetz- und herausnehmbar ist.

Zum anderen kann die Hülse kraft- und/oder formschlüssig mit dem Fingerhalterungsabschnitt verbunden sein. Im konkreten ist denkbar, die Hülse mit einem Innengewinde auszustatten, und das Lagerelement mit einem entsprechenden Außengewinde, so dass die Hülse darauf aufschraubbar ist. Auch eine Einschnappverbindung ist denkbar, so dass die Hülse auf das Lagerelement aufschiebbar und durch entsprechende Elastizität der Hülse und/oder des Lagerelements darauf arretiert ist. Auch ein die Hülse umschließender Sprengring ist verwendbar. Wird der Finger nicht durch eine in ihn eingebrachte Öffnung durchdringendes Halterungselement am Fingerhalterungsabschnitt festgehalten, erweist es sich als zweckmäßig, ihn in seiner Längsrichtung durch eine Nut, die mit einer Wulst zusammenwirkt, zu arretieren. Dabei ist beliebig, ob die Nut in den Finger oder in den Fingerhalterungsabschnitt eingebracht ist.

Aus Fertigungsgründen ist es vorteilhaft, den Endabschnitt des Fingers, der in den Fingerhalterungsabschnitt einzusetzen ist, kreiszylindrisch zu gestalten. Dann ist auch der Fingerhalterungsabschnitt vorteilhafterweise innen kreiszylindrisch.

Insbesondere bei Verwendung eines die Hülse, den Finger und den Fingerhalterungsabschnitt durchdringenden Halterungselements stellt sich das Problem, diese Teile derart auszurichten, dass die entsprechenden Öffnungen miteinander ausgerichtet sind, um das Halterungselement einführen zu können. Daher ist vorgeschlagen, die Hülse und die Fingerhalterungsabschnitte mit komplementären, ineinander eingreifenden Elementen auszustatten, die das Ausrichten in azimutaler Richtung erleichtern. Dafür kommt beispielsweise eine an der Außenseite des Fingerhalterungsabschnitts eingebrachte Nut und ein Wulst an der Innenseite der Hülse infrage.

Weiterhin weist die Hülse eine dem freien Ende des Fingers zugewandte Endwand auf, die vorteilhafterweise an den Fingerhalterungsabschnitten anliegt. Der Vorzug liegt darin, dass ein Ausrichten von Löchern in der Hülse und den Fingerhalterungsabschnitten sowie dem Finger unproblematisch möglich wird.

Aus Gründen der Fertigungsvereinfachung und der Verminderung der Anzahl unterschiedlicher zu lagernder Teile ist empfohlen, dass das Lagerelement aus zwei zumindest im wesentlichen identischen Lagerhälften besteht.

In den Zeichnungen sind zwei nachfolgend näher beschriebene Ausführungsbeispiele der Erfindung dargestellt. Es zeigt:
- Fig. 1: eine schematische Seitenansicht eines Schneidwerks und des Vorderteils eines Schrägförderergehäuses eines Mähdreschers, wobei das Schneidwerk einen Schneckenförderer enthält,-in dem die Erfindung verwirklicht ist;
- Fig. 2: eine teilweise geschnittene Vorderansicht, in der der Mittelteil des Schneckenförderers und die Anordnung der Finger wiedergegeben ist;
- Fig. 3: eine Explosionszeichnung des Zusammenbaus des Fingers und seiner Lagerung;
- Fig. 4: einen Querschnitt durch den montierten Zusammenbau des Fingers und seiner Lagerung;
- Fig. 5: einen Querschnitt entlang der Linie 5-5 der Figur 4, in der Nuten und Wulste zum Positionieren der Hülse dargestellt sind; und
- Fig. 6: einen Querschnitt durch einen Zusammenbau eines Fingers und einer Lagerung nach einer zweiten Ausführungsform der Erfindung.

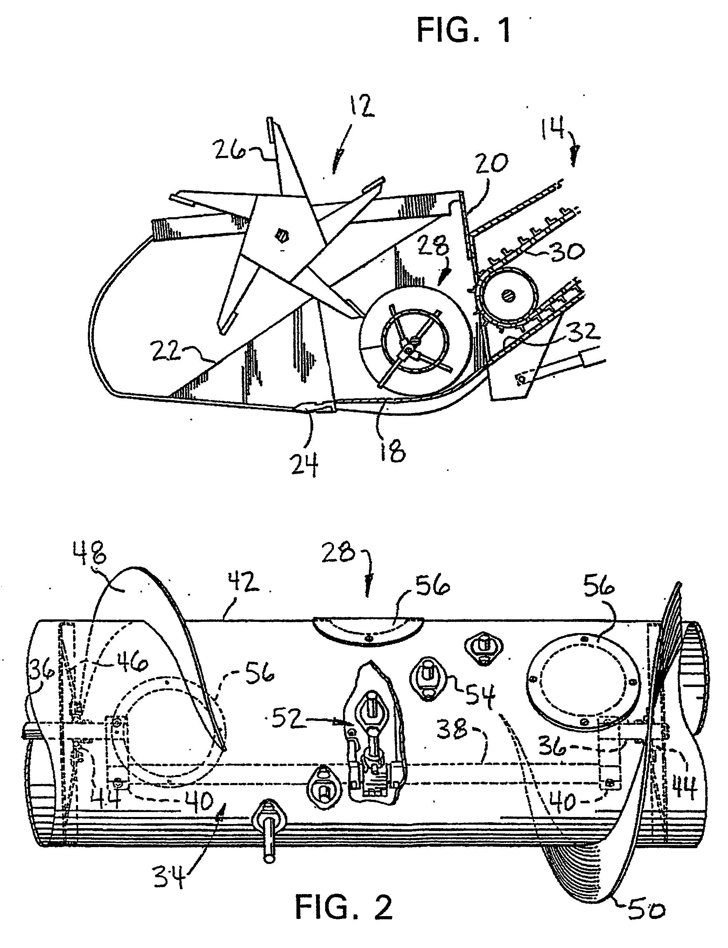

Die Erfindung wird im Schneckenförderer des ansonsten konventionellen, für die Getreideernte dienenden Schneidwerks 12 eines Mähdreschers verwendet, welches in Figur 1 in Seitenansicht dargestellt ist. Das Schneidwerk 12 ist am Schrägförderergehäuse 14 des Mähdreschers befestigt. Das Schneidwerk 12 besteht in seinem grundsätzlichen Aufbau aus einer vorn geöffneten Struktur, die einen Boden 18, eine Rückwand 20 und gegenüberliegende Seitenteile 22 aufweist. Ein Mähwerksbalken 24 erstreckt sich an der Vorderseite des Bodens 18 nach vorn, und dient zum Abschneiden stehenden Ernteguts. Eine Haspel 26 dreht sich oberhalb des Mähwerksbalkens 24 und über dem vorderen Teil des Bodens 18, und wirkt mit einem Schneckenförderer 28 des Schneidwerks 12 zusammen.

Das Schneidwerk 12 ist wesentlich breiter als der Schrägförderergehäuse 14 und der Schneckenförderer 28 führt das geerntete Gut vom Mähwerksbalken 24 zusammen und transportiert es seitlich zur Mitte des Schneidwerks 12. Dort wird das Erntegut dem Schrägförderergehäuse 14 übergeben, wo es vom Schrägförderer 30 des Schrägförderergehäuses 14 erfaßt und über den Boden des Schrägförderergehäuses 14 nach hinten und oben gefördert wird, um es der (nicht gezeigten) Dreschtrommel des Mähdreschers zuzuführen.

Viele Merkmale des Schneckenförderers 28 des Schneidwerks 12 sind konventionell, so dass seine generelle Form und Befestigung hier nur kurz beschrieben wird. Derartige Schneckenförderer 28 und ihr Betrieb sind wohlbekannt. Wie in Figur 2 dargestellt ist, wird der Schneckenförderer 28 drehbar von einer Achsanordnung 34 getragen, die gegenüberliegende koaxiale Achsabschnitte 36 und einen versetzten, exzentrischen Achsabschnitt 38 aufweist, der durch ein Paar von Armen 40 fest mit den Achsabschnitten 36 verbunden ist. Die an den gegenüberliegenden Enden des Schneckenförderers 28 angeordneten Achsabschnitte 36 sind an den Seitenteilen 22 des Schneidwerks 12 drehfest befestigt, wie es im Stand der Technik bekannt, aber nicht in den Zeichnungen dargestellt ist.

Der Aufbau des Schneckenförderers 28 umfaßt ein längliches, zylindrisches Rohr 42, das konzentrisch mit den Achsabschnitten 36 durch Lagerzusammenbauten 44 drehbar an den Achsabschnitten 36 gelagert ist, wobei die Lagerzusammenbauten 44 fest an der Innenseite des Rohrs 42 angebrachte Tragelemente 46 tragen, die insbesondere sternförmig sein können. Links bzw. rechts angeordnete wendelförmige Förderabschnitte 48, 50 des Schneckenförderers 28 wirken mit dem Boden 18 und der Rückwand 20 des Schneidwerks 12 zusammen, wenn der Schneckenförderer 28 sich dreht, um Erntegut zur Mitte des Schneckenförderers 28 zu fördern. Dort ist eine Vielzahl von Zusammenbauten 52 von Fingern und Lagerungen am exzentrischen Achsabschnitt 38 befestigt. Jeder Finger 60 eines Zusammenbaus 52 erstreckt sich durch einen einer Vielzahl von Führungszusammenbauten 54, die in der Wand des Rohrs 42 befestigt sind. Entfernbare Deckel 56 ermöglichen einen Zugang ins Innere des Rohrs 42, um beispielsweise die Zusammenbauten 52 von Fingern und Lagerungen zu warten. Geeignete, konventionelle Antriebseinrichtungen, die nicht in der Zeichnung wiedergegeben sind, sind bereitgestellt, um den Schneckenförderer 28 auf den Achsabschnitten 36 zu drehen.

Jeder Zusammenbau 52 von Fingern und Lagerungen umfaßt ein Paar Lagerhälften 58, die einen langgestreckten Finger 60 haltern. Die zwei Lagerhälften 58 sind durch einen Scharnierstift 62 aneinander befestigt. Der Finger 60 hat einen ersten (proximalen) Endabschnitt 66 mit einer quer dadurch verlaufenden Bohrung 68, deren Achse senkrecht zur Längsachse des Fingers 60 verläuft.

Jede Lagerhälfte 58 besteht aus einer zentralen Wand, die einen Lagerabschnitt 74 bildet, die eine innere halbkreisförmige Lageroberfläche 76 und gegenüberliegende parallele Enden 78 aufweist. An einer Seite des Lagerabschnitts 74 erstrecken sich zwei Scharnieransätze 82 radial von der halbkreisförmigen Lageroberfläche 76 fort. Bohrungen 84 in den Scharnieransätzen 82 sind zueinander koaxial und parallel zur Längsachse der Lageroberfläche 76. An der gegenüberliegenden Seite des Lagerabschnitts 74 ist ein sich radial zur halbkreisförmigen Lageroberfläche 76 erstreckender Fingerhalterungsabschnitt 88. Der Fingerhalterungsabschnitt 88 hat einen im wesentlichen halbkreisförmigen Flansch 92. Eine quer verlaufende Bohrung 94 erstreckt sich durch jeden Fingerhalterungsabschnitt 88. Jede Lagerhälfte 58 ist vorzugsweise aus einem harten, stoßfesten Material, welches auch ohne Schmierung eine lange Lebensdauer der Lagerung gewährleistet. Ein Polyamid, wie Zytel ST 801, wurde erfolgreich verwendet.

Der Versatz der Scharnieransätze 82 und die Anordnung der Bohrungen 84 für den Scharnierstift 62 sind derart gestaltet, dass die Lage rober flächen 76 sich gegenüberliegen und einander zugewandt sind, wenn jeweils zwei Lagerhälften 58 zusammengesetzt werden, wobei die beiden Lagerhälften 58 zusammenpassen und der Scharnierstift 62 in die Bohrung 84 eingesetzt werden kann, so dass die Lagerhälften 58 durch das - aus Scharnierstift 62 und Bohrungen 84 gebildete - Scharnier drehbar aneinander befestigt sind, und die zusammengefügten Lageroberflächen 76 eine näherungsweise zylindrische Öffnung definieren. Die zusammenpassenden Lagerhälften 58 sind vorzugsweise miteinander identisch. Es ist denkbar, andere Formen der Kopplung als den Scharnierstift 62 zu verwenden, welche die Lagerhälften 58 schwenkbar aneinander koppeln. Es ist denkbar, die zwei Scharnierhälften als einzelne Komponente mit einem einteiligen Scharnier zu gießen.

Die schwenkbare Lagerung der zwei Lagerhälften 58 kann geöffnet, auf dem exzentrischen Achsabschnitt 38 positioniert und geschlossen werden. Der Fingerhalterungsabschnitt 88 jeder Lagerhälfte 58 ist um eine senkrecht zur Achse der Lageroberfläche 76 verlaufende Achse symmetrisch. Wenn die Lagerhälften 58 zusammengefügt werden, bilden die Fingerhalterungsabschnitte 88 einen zylindrischen Sockel, der den ersten (proximalen) Endabschnitt 66 des Fingers 60 aufnimmt. Die quer verlaufende Bohrung 68 im Finger 60 ist mit der quer verlaufenden Bohrung 94 in den Fingerhalterungsabschnitten 88 ausgerichtet.

Eine entlang des Fingers 60 verschiebbare Haube oder Hülse 96 ist über den zusammenpassenden Fingerhalterungsabschnitten 88 der Lagerhälften 58 angeordnet. Die Hülse 96 hat ebenfalls eine quer verlaufende Bohrung 98, die mit den quer verlaufenden Bohrungen 94 im Fingerhalterungsabschnitt 88 und der quer verlaufenden Bohrung 68 im Finger 60 ausgerichtet ist. Die Hülse 96 haltert die zwei Lagerhälften 58 in einer zusammenpassenden Stellung auf dem exzentrischen Achsabschnitt 38. Die Hülse 96 hat eine Endwand 100 mit einer mittigen Öffnung 102, um der Hülse 96 das Verschieben auf dem Finger 60 zu ermöglichen. Die Hülse 96 als solche ist wie eine Kappe aufgebaut. Die Endwand 100 liegt am Ende 104 des Fingerhalterungsabschnitts 88 an, so dass die Hülse 96 satt auf dem Fingerungsabschnitt 88 aufliegt, wobei die quer verlaufenden Bohrungen genau miteinander ausgerichtet sind. Die Hülse 96 kann auch ohne Endwand 100 hergestellt werden. Die Hülse 96 könnte auch in die Lagerabschnitte 74 eingreifen oder sie umgreifen, und bei ausgerichteten Bohrungen vollständig auf den Lagerhälften 58 aufliegen. Die Hülse 96 ist aus einem Gußmaterial hergestellt. Alternativ kann die Hülse aus demselben Material wie die Lagerhälften 58 gegossen sein.

Die zusammengefügten Fingerhalterungsabschnitte 88 definieren zum Ausrichten dienende Nuten 106. Die Hülse 96 wiederum hat entsprechende Wulste 108, die in den Nuten 106 sitzen, um die Hülse 96 in Drehrichtung auf den Fingerhalterungsabschnitten 88 zu orientieren. Das stellt eine genaue Ausrichtung der Bohrung 98 der Hülse 96 mit den Bohrungen 94 in den Fingerhalterungsabschnitten 88 sicher. Während zwei Nuten 106 und Wulste 108 dargestellt sind, ist anzumerken, dass nur eine Nut 106 und ein Wulst 108 ausreichen würden, die Hülse 96 auszurichten. Es sind keine zusätzlichen Mittel zum Ausrichten des Fingers 60 im zylindrischen Sockel der Fingerhalterungsabschnitte 88 vorgesehen. Daher muß der Finger 60 innerhalb des Sockels gedreht werden, um die Bohrung 68 des Fingers 60 mit den Bohrungen 94 auszurichten. Wenn es gewünscht wird, können der Finger 60 und der Fingerhalterungsabschnitt 88 mit Mitteln zum Ausrichten versehen sein. Beispielsweise kann der Finger 60 mit einem quadratischen Ende hergestellt werden, und der Sockel komplementär geformt werden, wie in der US 4 271 956 A gezeigt ist, um das Ausrichten der Löcher zu vereinfachen.

Ein Haltestift 110 ist durch die Bohrung 98 in der Hülse 96, die Bohrungen 94 in den Fingerhalterungsabschnitten 88 und die Bohrung 68 im Finger 60 eingesetzt. Der Haltestift 110 dient zu zwei Zwecken; der erste besteht darin, die Hülse 96 auf den Fingerhalterungsabschnitten 88 zu halten, um sicherzustellen, dass die Lagerhälften 58 auf dem exzentrischen Achsabschnitt 38 festgehalten werden. Der zweite Zweck des Haltestifts 110 besteht darin, den Finger 60 an den Fingerhalterungsabschnitten 88 festzuhalten. Vorzugsweise ist der Stift ein federnder Verriegelungsstift, der von Hand in die Bohrungen eingesetzt werden kann, und auch von Hand ohne Handwerkzeug wieder entfernt werden kann. Daher können die Finger 60 und/oder die Lagerhälften 58 von Hand ersetzt werden, ohne dass innerhalb des Rohrs 42 Handwerkzeuge gehandhabt werden müssen.

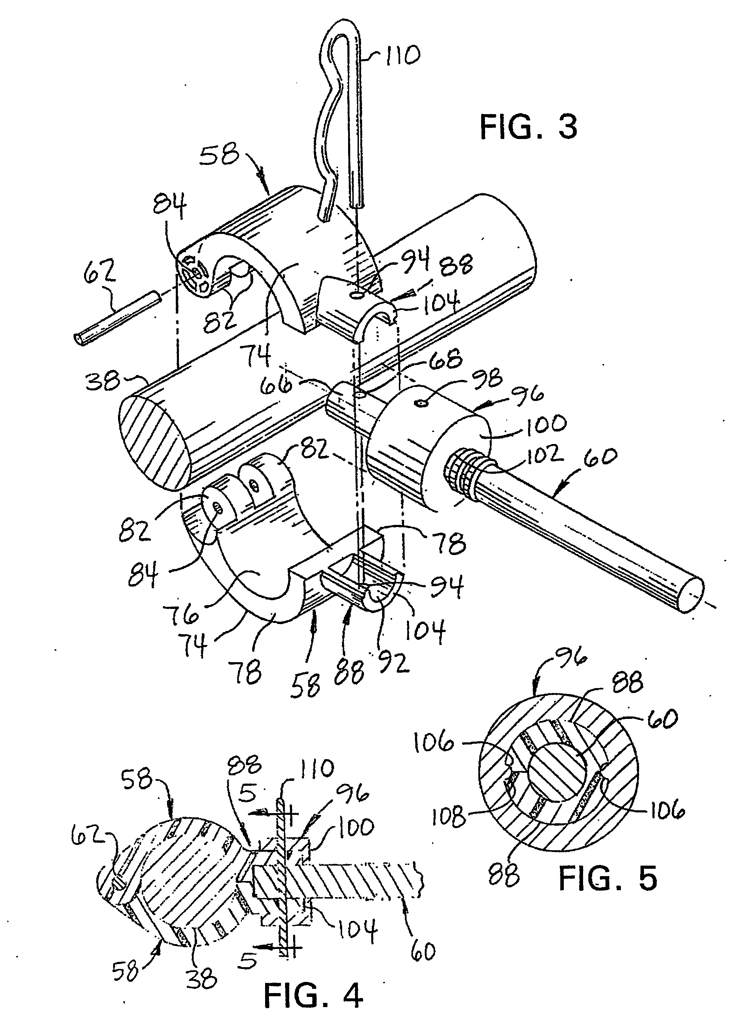

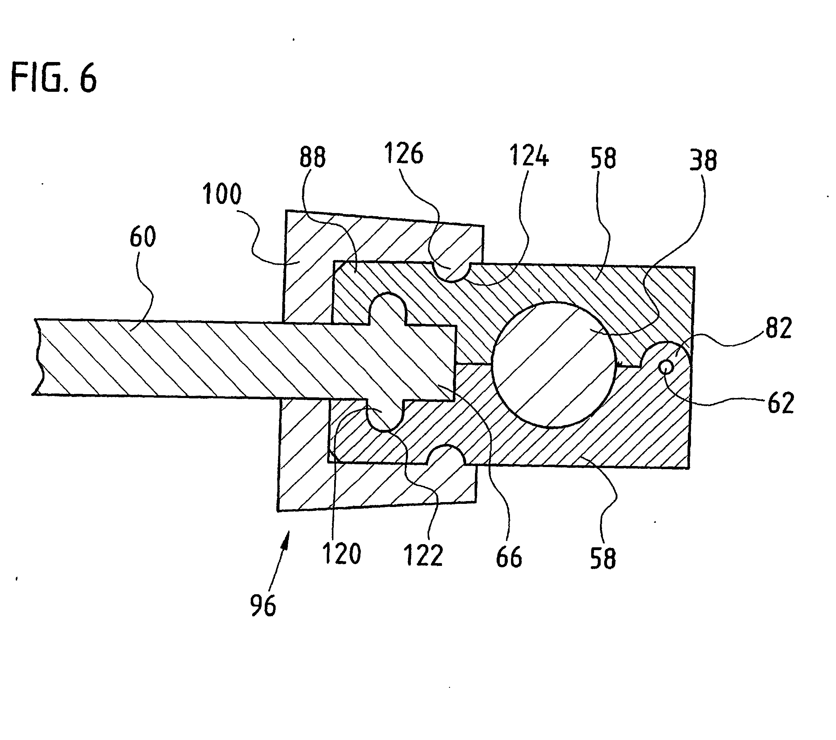

In Figur 6 ist eine zweite Ausführungsform der Erfindung dargestellt. Der Finger 60 ist ebenfalls durch zwei Lagerhälften 58 am Achsabschnitt 38 befestigt, der dem der Figur 2 entspricht. Die Lagerhälften 58 sind an einem ersten Ende, das in der Zeichnung rechts vom Achsabschnitt 38 angeordnet ist, durch einen Stift 62 miteinander verbunden, der Scharnieransätze 82 der Lagerhälften 58 durchdringt, die den in Figur 3 gezeigten entsprechen.

Der Finger 60 wird formschlüssig durch die Fingerhalterungsabschnitte 88 gehalten. Dazu sind die Fingerhalterungsabschnitte 88 innenseitig mit einer umlaufenden Nut 122 versehen, in die ein umlaufender, ringförmig überstehender Wulst 120 des Fingers 60 eingreift. Der Wulst 120 und die Nut 122 fixieren den Finger 60 in seiner Längsrichtung. Eine Fixierung in azimutaler (Dreh-) Richtung ist nicht unbedingt notwendig, könnte aber durch Nuten 106 und Wulste 108, wie in Figur 5 dargestellt, oder durch einen nicht-kreisförmigen Querschnitt des Fingers 60, wie in der US 4 271 956 A offenbart, erzielt werden.

Die Hülse 96 fixiert die Lagerhälften 58 an ihrem zweiten Ende aneinander und sichert sie somit auf dem Achsabschnitt 38. Die Hülse 96 weist an ihrer dem Achsabschnitt 38 zugewandten Seite einen innenseitig umlaufenden Wulst 126 auf, der in eine ebenfalls umlaufende Nut 124 in den Lagerhälften 88 eingreift. Die Hülse 96 und/oder die Lagerhälften 58 sind aus einem hinreichend elastischen Material hergestellt, so dass die Hülse 96 einfach auf die Lagerhälften 58 aufschiebbar ist und dadurch, dass der Wulst 126 in der Nut 124 einrastet, durch eine Einschnappverbindung arretiert ist. Anzumerken ist, dass die Positionen der Wülste 120 bzw. 126 mit denen der Nuten 124 bzw. 122 vertauschbar sind. Auch kann die Hülse 96 auf die Lagerhälften 88 mittels eines Gewindes aufgeschraubt, oder durch einen Sprengring odgl. fixiert werden. Der Vorteil der zweiten Ausführungsform besteht darin, dass kein Stift durch eine Bohrung zu führen ist, und dass sich eine azimutale Ausrichtung von Finger 60, Lagerhälften 88 und Hülse 96 erübrigt. Die in Figur 6 gezeigte Befestigungsart kann auch zusätzlich zu der in den vorhergehenden Figuren dargestellten eingesetzt werden.

Es ist möglich, andere als die gezeigten Zusammenbauten von Fingern und Lagerungen zu verwenden, um die vorliegende Erfindung auszuführen. Die Erfindung beschränkt sich nicht auf die beschriebene Ausführungsform, sondern wird durch die folgenden Ansprüche definiert.

## Patentansprüche

1. Lageranordnung für einen Finger (60), mit einem schließbaren Lagerelement, das auf einem Achsabschnitt (38) drehbar anordenbar ist, und einen Fingerhalterungsabschnitt (88) aufweist, der zur Aufnahme eines ersten Endabschnitts (66) eines Fingers (60) eingerichtet ist, **gekennzeichnet durch** eine Hülse (96), die eingerichtet ist, den Fingerhalterungsabschnitt (88) des Lagerelements zu umschließen und das Lagerelement zu schließen.

2. Lageranordnung nach Anspruch 1, **dadurch gekennzeichnet, dass** das Lagerelement zwei separate oder durch ein Scharnier miteinander verbundene Lagerhälften (58) aufweist, die eingerichtet sind, den Achsabschnitt (38) zu umschließen.

3. Lageranordnung nach Anspruch 1 oder 2, **dadurch gekennzeichnet, dass** der erste Endabschnitt (66) des Fingers (60) mit einem Loch, insbesondere einer Bohrung (68) versehen ist, dass der Fingerhalterungsabschnitt (88) mit einem Loch, insbesondere einer Bohrung (94) versehen ist, dass die Hülse (96) mit einem Loch, insbesondere einer Bohrung (98) versehen ist, dass die Löcher miteinander ausrichtbar sind, und dass ein Halterungselement eingerichtet ist, die Löcher zu durchdringen.

4. Lageranordnung nach Anspruch 3, **dadurch gekennzeichnet, dass** das Halterungselement ein Haltestift (110), insbesondere ein federnder verriegelbarer Splint ist.

5. Lageranordnung nach einem der Ansprüche 3 oder 4, **dadurch gekennzeichnet, dass** das Halterungselement ohne Werkzeug von Hand entfernbar ist.

6. Lageranordnung nach einem der vorhergehenden Ansprüche, **dadurch gekennzeichnet, dass** die Hülse (96) form- und/oder kraftschlüssig mit dem Fingerhalterungsabschnitt (88) verbindbar ist, insbesondere durch ein Gewinde und/oder durch einen Sprengring und/oder durch eine Einschnappverbindung.

7. Lageranordnung nach einem der vorhergehenden Ansprüche, **dadurch gekennzeichnet, dass** der erste Endabschnitt (66) des Fingers (60) zylindrisch und der Fingerhalterungsabschnitt (88) innenseitig ebenfalls zylindrisch ist.

8. Lageranordnung nach einem der vorhergehenden Ansprüche, **dadurch gekennzeichnet, dass** die Fingerhalterungsabschnitte (88) und die Hülse (96) komplementäre, ineinander eingreifende Elemente aufweisen, um die Hülse (96) auf den Fingerhalterungsabschnitten (88) zu positionieren.

9. Lageranordnung nach Anspruch 8, **dadurch gekennzeichnet, dass** die komplementären, ineinander eingreifenden Elemente eine Nut (106) außen am Fingerhalterungsabschnitt (88) und einen Wulst (108) an der Innenseite der Hülse (96) umfassen.

10. Lageranordnung nach einem der vorhergehenden Ansprüche, **dadurch gekennzeichnet, dass** die Hülse (96) eine Endwand (100) mit einer darin angeordneten Öffnung aufweist, und dass die Endwand (100) an den Fingerhalterungsabschnitten (88) anlegbar ist.

11. Lageranordnung nach einem der Ansprüche 2 bis 10, **dadurch gekennzeichnet, dass** die Lagerhälften (58) zumindest im wesentlichen identisch sind.

12. Lageranordnung nach einem der vorhergehenden Ansprüche, **dadurch gekennzeichnet, dass** das Lagerelement drehbar auf einem Achsabschnitt (38) angeordnet ist, dass ein Finger (60) im Fingerhalterungsabschnitt (88) gehalten ist, und dass die Hülse (96) den Fingerhalterungsabschnitt (88) umschließt und die Hülse (96) das Lagerelement auf dem Achsabschnitt (38) fixiert.

13. Schneckenförderer (12) mit wenigstens einer Lageranordnung nach einem der vorhergehenden Ansprüche.

## Claims

1. A bearing arrangement for a finger (60), with a bearing element which can be closed and can be arranged rotatably on a shaft section (38), and comprises a finger retaining section (88), which is arranged to receive a first end section (66) of a finger (60), **characterized by** a sleeve (96) which is arranged to enclose the finger retaining section (88) of the bearing element and to close the bearing element.

2. A bearing arrangement according to claim 1, **characterized in that** the bearing element comprises two bearing halves (58), separate or connected together by a hinge, which are arranged to enclose the shaft section (38).

3. A bearing arrangement according to claim 1 or 2, **characterized in that** the first end section (66) of the finger (60) is provided with a hole, especially a bore (68), **in that** the finger retaining section (88) is provided with a hole, especially a bore (94), **in that** the sleeve (96) is provided with a hole, especially a bore (98), **in that** the holes can be aligned with one another and **in that** a retaining element is arranged to pass through the holes.

4. A bearing arrangement according to claim 3, **characterized in that** the retaining element is a retaining pin (110), especially a spring locking pin.

5. A bearing arrangement according to either claim 3 or 4, **characterized in that** the retaining element can be removed by hand without a tool.

6. A bearing arrangement according to any of the preceding claims, **characterized in that** the sleeve (96) can be connected positively and/or non-positively to the finger retaining section (88), especially by a thread and/or by a circlip and/or by a snap connector,

7. A bearing arrangement according to any of the preceding claims, **characterized in that** the first end section (66) of the finger (60) is cylindrical and the finger retaining section (88) is likewise internally cylindrical.

8. A bearing arrangement according to any of the preceding claims, **characterized in that** the finger retaining section (88) and the sleeve (96) comprise complementary elements engaging in one another, in order to position the sleeve (96) on the finger retaining sections (88).

9. A bearing arrangement according to claim 8, **characterized in that** the complementary elements engaging in one another comprise a groove (106) in the outside of the finger retaining section (88) and a bead (108) on the inside of the sleeve (96).

10. A bearing arrangement according to any of the preceding claims, **characterized in that** the sleeve (96) has an end wall (100) with an opening therein and **in that** the end wall (100) can be applied against the finger retaining sections (88).

11. A bearing arrangement according to any of claims 2 to 10, **characterized in that** the bearing halves (58) are at least substantially identical.

12. A bearing arrangement according to any of the preceding claims, **characterized in that** the bearing element is arranged rotatably on a shaft section (38), **in that** a finger (60) is held in the finger retaining section (88) and **in that** the sleeve (96) encloses the finger retaining section (88) and the sleeve (96) fixes the bearing element on the shaft section (38).

13. An auger conveyor (12) with at least one bearing arrangement according to any of the preceding claims.

## Revendications

1. Arrangement de palier d'un doigt (60), comportant un élément de palier adapté pour se fermer, qui peut être disposé, de façon rotative, sur une section d'axe (38), et qui présente une section support de doigt (88) qui est agencée pour la réception d'une première section d'extrémité (66) d'un doigt (60), **caractérisé par** une gaine (96) qui est agencée pour entourer la section support de doigt (88) de l'élément de palier et fermer l'élément de palier.

2. Arrangement de palier selon la revendication 1, **caractérisé en ce que** l'élément de palier présente deux moitiés de palier (58) séparées ou reliées l'une avec l'autre par une charnière, qui sont agencées pour entourer la section d'axe (38).

3. Arrangement de palier selon la revendication 1 ou 2, **caractérisé en ce que** la première section d'extrémité (66) du doigt (60) est munie d'un trou, en particulier d'un perçage (68), la section support de doigt (88) est munie d'un trou, en particulier d'un perçage (94), la gaine (96) est munie d'un trou, en particulier d'un perçage (98), les trous peuvent être orientés les uns avec les autres, et un élément de support est agencé pour pénétrer à travers les trous.

4. Arrangement de palier selon la revendication 3, **caractérisé en ce que** l'élément de support est une tige support (110), en particulier une goupille fendue pouvant être verrouillée en faisant ressort.

5. Arrangement de palier selon l'une des revendications 3 ou 4, **caractérisé en ce que** l'élément de support peut être enlevé à la main sans outil.

6. Arrangement de palier selon l'une des revendications précédentes, **caractérisé en ce que** la gaine (96) peut être reliée avec la section support de doigt (88) par verrouillage géométrique, en particulier par un filetage et/ou par un circlip et/ou par un raccordement par encliquetage.

7. Arrangement de palier selon l'une des revendications précédentes, **caractérisé en ce que** la première section d'extrémité (66) du doigt (60) est cylindrique et la section support de doigt (88) est également cylindrique sur son côté intérieur.

8. Arrangement de palier selon l'une des revendications précédentes, **caractérisé en ce que** les sections supports de doigt (88) et la gaine (96) présentent des éléments complémentaires, s'imbriquant l'un dans l'autre, pour positionner la gaine (96) sur les sections supports de doigt (88).

9. Arrangement de palier selon la revendication 8, **caractérisé en ce que** les éléments complémentaires, s'imbriquant l'un dans l'autre, comprennent une rainure (106) à l'extérieur sur la section support de doigt (88) et un bourrelet (108) sur la face interne de la gaine (96).

10. Arrangement de palier selon l'une des revendications précédentes, **caractérisé en ce que** la gaine (96) présente une paroi d'extrémité (100) avec une ouverture disposée dans celle-ci, et **en ce que** la paroi d'extrémité (100) peut être posée sur les sections supports de doigt (88).

11. Arrangement de palier selon l'une des revendications 2 à 10, **caractérisé en ce que** les moitiés de palier (58) sont sensiblement identiques.

12. Arrangement de palier selon l'une des revendications précédentes, **caractérisé en ce que** l'élément de palier est disposé de façon rotative sur une section d'axe (38), un doigt (60) est maintenu dans la section support de doigt (88) et la gaine (96) entoure la section support de doigt (88) et fixe l'élément de palier sur la section d'axe (38).

13. Transporteur à vis (12) comportant au moins un arrangement de palier selon l'une quelconque des revendications précédentes.
